# FASCICULE DE BREVET EUROPEEN

(11) **EP 0 946 069 B1**
(45) Date de publication et mention de la délivrance du brevet: **26.10.2005**
(21) Numéro de dépôt: 99400695.5
(22) Date de dépôt: 22.03.1999
(51) Int. Cl.: H04Q 7/26

(54) **Système pour intégrer des terminaux de télécommunication privé**
System zum Integrieren von privaten Kommunikationsendgeräten
System for integrating private communication terminals

(30) Priorité: 27.03.1998 FR 9803848
(43) Date de publication de la demande: 29.09.1999
(73) Titulaire: ALCATEL, 75008 Paris (FR)
(72) Inventeur: El Haysoufi, Jamal, 75014 Paris (FR); Martin, Maurice, 75013 Paris (FR); Girardeau, Laurent, 95800 Cergy le Haut (FR); Dore-Michaelis, Alexandra, 75015 Paris (FR); Cartigny, Marc, 78360 Montesson (FR); Rousseau, Jean-René, 95000 Neuville S/Oise (FR)
(74) Mandataire: El Manouni, Josiane

(56) Documents cités:
- WO-A-94/26073
- WO-A-97/34437
- WO-A-98/27761

## Description

La présente invention concerne d'une manière générale les systèmes de télécommunications, et plus particulièrement un système pour intégrer des terminaux mobiles, notamment des terminaux cellulaires, à un système de télécommunication privé.

On entend ici par terminaux mobiles des terminaux destinés à fonctionner dans un système public de télécommunications mobiles, tel que par exemple, pour des terminaux cellulaires, le système GSM (pour "Global System for Mobile communications"), un tel système public de télécommunications mobiles étant ainsi formé d'un réseau appelé aussi PLMN (pour "Public Land Mobile Network") et de terminaux mobiles, appelés aussi stations mobiles, aptes à accéder à ce réseau.

On entend par système de télécommunication privé un système formé d'un ou de plusieurs autocommutateurs privés (ou PABX, pour "Private Automatic Branch Exchange") reliés en un réseau dit aussi réseau privé, et de terminaux, généralement fixes, raccordés à ce ou ces PABX.

Un système pour intégrer des terminaux mobiles à un système de télécommunication privé doit notamment permettre d'établir des appels entrants ou des appels sortants relatifs à ces terminaux mobiles, selon une numérotation dite numérotation privée propre à ce système de télécommunication privé.

Pour cela une solution peut consister à modifier l'une ou l'autre des entités que constituent le PLMN (pour "Public Land Mobile Network") et le ou les PABX, de manière à leur permettre d'établir de tels appels. On conçoit cependant qu'une telle solution n'est pas optimale en termes de souplesse.

Une autre solution, décrite dans le document WO 96/21329, permet d'éviter de modifier un PABX en lui associant un équipement appelé serveur, assurant, pour lesdits appels entrants, une conversion de numéro privé en numéro public d'abonné mobile. Dans ce document, il est en outre simplement indiqué que lesdits appels sortants sont routés vers un tel serveur.

Dans le document WO 94/26073, il est indiqué que lesdits appels sortants sont routés vers un tel serveur sur simple reconnaissance de l'appartenance de ces terminaux audit système de télécommunication privé, ceci étant indiqué par la base de données d'abonnés mobiles propre au système public de télécommunications mobiles (ou HLR, pour "Home Location Register" dans le système GSM par exemple).

Une telle solution a notamment pour inconvénient que le PLMN doit être modifié pour assurer un tel routage. En outre le routage desdits appels sortants n'est pas optimisé, pour le cas d'appels vers des utilisateurs du système public.

Une telle solution a en outre pour inconvénient que la gestion de tels utilisateurs mobiles, par le gestionnaire du système de télécommunications privé, n'est pas optimisée. Notamment le contrôle des droits de ces utilisateurs n'est pas optimisé car les données relatives à d'éventuelles restrictions d'appels entrants et/ou sortants concernant ces utilisateurs ne peuvent pas être centralisées, mais nécessitent d'être introduites dans les terminaux mobiles (ou dans les cartes telles que les cartes SIM associées à ces terminaux) et/ou dans ledit serveur, et le contrôle des temps de communications mobiles, pour celles de ces communications qui sont autorisées, est également difficilement réalisable.

Une solution permettant d'éviter de modifier le réseau PLMN consiste, dans les systèmes appelés VPN (pour "Virtual Private Network"), à associer au PLMN un équipement serveur assurant, pour lesdits appels sortants, une conversion de numéro privé en numéro public, l'appel étant ensuite routé vers le réseau privé via le réseau public, ou PSTN (pour "Public Switched Telephone Network").

Une telle solution a notamment pour inconvénient que le routage desdits appels sortants n'est pas optimisé pour le cas d'appels vers des utilisateurs du système privé.

En outre, de tels systèmes VPN nécessitent une modification du ou des PABX pour pouvoir effectuer, pour les appels sortants, une conversion de numéro privé en numéro public d'abonné mobile, et pour permettre aux utilisateurs de tels terminaux mobiles d'accéder aux services offerts par le système privé.

La présente invention a notamment pour but d'éviter les divers inconvénients mentionnés dans ce qui précède.

En outre, le document WO 97/34437 A1 décrit un réseau de télécommunications mobiles auquel est intégré un système privé de communication sans fil. Un système privé de communications sans fil est intégré à la fois à un réseau privé de téléphonie (ou PTN, pour « Private Telephony Network »)) et à un réseau mobile terrestre public (ou PLMN, pour « Public Land Mobile Network ») qui inclut un système cellulaire public. Le système privé sans fil fournit des services mobiles à des terminaux mobiles dits « corporate » (ou CMTS, pour « Corporate Mobile Terminals ») qui font partie d'un groupe « corporate » de terminaux du PTN. Les CMTs du système privé sans fil sont vus par le PTN comme des terminaux d'extension fixes normaux et les caractéristiques internes du PTN telles que rappel, identification d'appelant et assistance de l'opréateur peuvent être utilisés par les CMTs.

La présente invention a ainsi pour objet un système pour intégrer des terminaux mobiles à un système de télécommunication privé, ce système étant essentiellement caractérisé en ce qu'il comporte:
- un premier et un deuxième équipement serveur, associés respectivement au système public de télécommunications mobiles auquel accèdent lesdits terminaux mobiles et au système de télécommunication privé, permettant d'établir des appels entrants ou des appels sortants relatifs à ces terminaux mobiles et selon une numérotation dite numérotation privée propre audit système de télécommunication privé, et contenant des données dites respectivement premières et deuxièmes données de service, relatives aux utilisateurs de tels terminaux mobiles,
- des moyens de coopération entre lesdits premier et deuxième équipements serveurs, pour l'établissement desdits appels relatifs auxdits terminaux mobiles et/ou la gestion desdites données de service.

Selon une autre caractéristique, lesdits moyens de coopération comportent, dans le premier équipement serveur, des moyens pour convertir un numéro privé, utilisé pour un appel sortant, en un numéro public utilisable par ledit système de télécommunications mobiles, et permettant de router l'appel vers ledit deuxième équipement serveur.

Ainsi, le PLMN n'a pas besoin d'être modifié pour assurer un routage desdits appels sortants vers ledit système privé, contrairement à l'art antérieur rappelé plus haut.

Avantageusement, ledit numéro public obtenu après conversion inclut ledit numéro privé dans un champ appelé sous-adresse d'une adresse comportant elle-même un numéro public attribué audit deuxième équipement serveur.

Selon une autre caractéristique, lesdites premières données de service comportent des données permettant de contrôler les droits des utilisateurs desdits terminaux mobiles, relativement à un profil d'utilisateur prédéfini, et les temps de communication mobiles de ces utilisateurs.

Ainsi la gestion des utilisateurs mobiles par le gestionnaire du système de télécommunication privé est optimisée par le fait qu'elle peut être centralisée et située au plus près des éléments de supervision des communications mobiles.

Suivant une autre caractéristique, lesdits moyens de coopération entre équipements serveurs comportent un réseau reliant entre eux ces équipements serveurs, et permettant de diffuser des données de service d'un équipement serveur vers au moins un autre équipement serveur.

Ainsi la gestion des données de service est également optimisée par le fait qu'elle peut être faite de manière centralisée et en évitant des risques d'erreurs.

D'autres objets et caractéristiques de la présente invention apparaîtront à la lecture de la description suivante d'un exemple de réalisation, faite en relation avec les dessins ci-annexés, dans lesquels:
- la figure 1 est un schéma synoptique destiné à illustrer un exemple de système suivant l'invention permettant d'intégrer des terminaux mobiles à un système de télécommunication privé,
- la figure 2 est un schéma destiné à illustrer le cheminement, à l'intérieur d'un tel système, d'un appel sortant relatif à un terminal mobile,
- les figures 3 et 4 sont des diagrammes destinés à illustrer le traitement d'un tel appel sortant,
- la figure 5 est un schéma destiné à illustrer le cheminement, à l'intérieur d'un tel système, d'un appel entrant relatif à un terminal mobile,
- les figures 6 à 8 sont des diagrammes destinés à illustrer le traitement d'un tel appel entrant,
- les figures 9 et 10 sont des schémas destinés à illustrer le type de moyens à prévoir dans chacun desdits premier et deuxième équipements serveurs,
- la figure 11 est un schéma destiné à illustrer un exemple de coopération entre lesdits premier et deuxième équipements serveurs, pour la gestion desdites données de service.

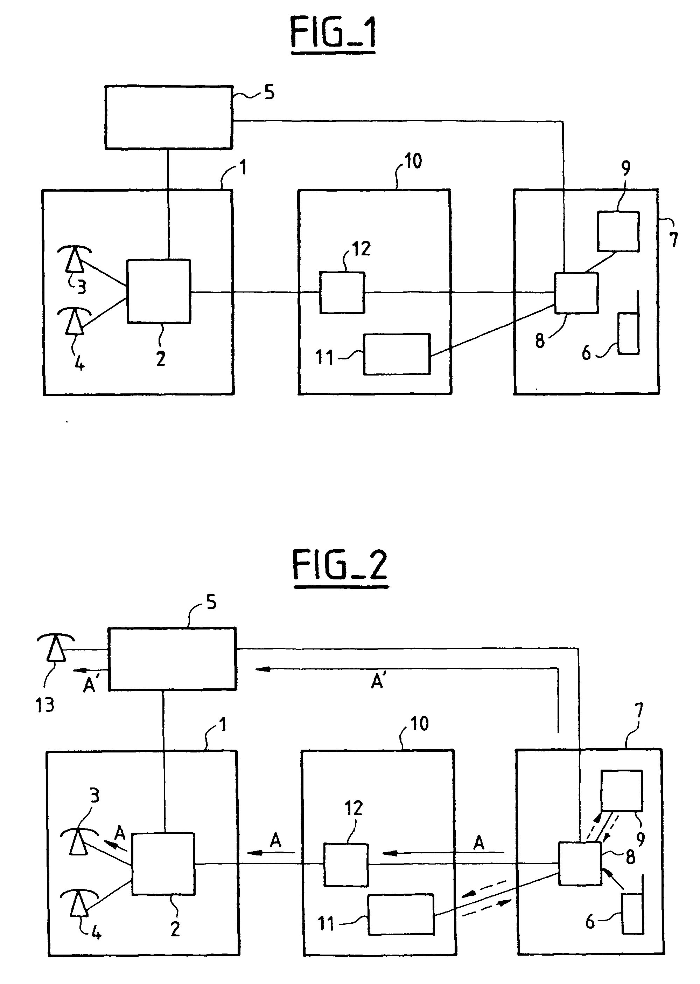

Sur la figure 1 sont illustrés:
- un système de télécommunication privé 1, comportant à titre d'exemple un seul autocommutateur privé 2, ou PABX (pour "Private Automatic Branch Exchange"), auquel sont raccordés des terminaux fixes, tels que à titre d'exemple les terminaux 3 et 4, et qui est par ailleurs raccordé au réseau de télécommunications public 5 tel que PSTN (pour "Public Switching Telecommunication Network") ou ISDN (pour "Integrated Services Digital Network"),
- des terminaux mobiles, tels que à titre d'exemple le terminal 6, aptes à fonctionner dans un système public de télécommunications mobiles tel que le système 7, dont les infrastructures (ou réseau PLMN) comportent de manière connue, entre autres entités, des entités appelées centres de commutation mobile (ou MSC, pour "Mobile Switching Center"), tel que celui repéré 8, en relation avec une entité appelée base de données d'abonnés mobiles 9, ou HLR (pour "Home Location Register") dans le système GSM.

Sur la figure 1 est par ailleurs illustré un système 10 pour intégrer des terminaux mobiles, tels que à titre d'exemple le terminal 6, à un système de télécommunication privé, tel que à titre d'exemple le système 1.

Suivant l'invention, un tel système pour intégrer des terminaux mobiles à un système de télécommunication privé comporte essentiellement:
- un premier et un deuxième équipement serveur, associés respectivement au système public de télécommunications mobiles et au système de télécommunication privé, permettant d'établir des appels entrants ou des appels sortants relatifs à ces terminaux mobiles et selon une numérotation dite numérotation privée propre audit système de télécommunication privé, et contenant des données dites respectivement premières et deuxièmes données de service, relatives aux utilisateurs de tels terminaux mobiles,
- des moyens de coopération entre lesdits premier et deuxième équipements serveurs, pour l'établissement desdits appels relatifs auxdits terminaux mobiles et/ou la gestion desdites données de service.

Dans l'exemple illustré le premier équipement serveur 11 est raccordé au PLMN, en l'occurrence au MSC 8, et le deuxième équipement serveur 12 est raccordé d'une part au PLMN, en l'occurrence au MSC 8, et d'autre part au PABX 2.

Dans l'exemple décrit, le système de télécommunication privé utilise une numérotation privée selon laquelle un numéro privé peut être notamment:
- un numéro abrégé, pour un appel à l'intérieur de ce système,
- un numéro public précédé d'un préfixe de sortie, pour un appel vers l'extérieur de ce système,
- un code d'activation de service, tel que par exemple renvoi d'appel, consultation de messagerie vocale, ...etc.

Dans ce qui suit on entend également par appels entrants, respectivement sortants, des appels relatifs auxdits terminaux mobiles et utilisant ladite numérotation privée.

En outre, dans l'exemple illustré, le système 10 offre un service dit de numéro unique, permettant, dans le cas d'un utilisateur auquel sont attribués un terminal fixe et un terminal mobile, et dans le cas de non réponse de cet utilisateur sur son terminal fixe, d'aiguiller cet appel soit vers un assistant vocal (pour un renvoi, au choix de l'appelant, soit vers le terminal mobile associé à ce terminal fixe, soit vers un autre numéro, ou vers un service de messagerie vocale), soit vers ce terminal mobile, soit vers un tel autre numéro ou un tel service de messagerie vocale, d'une manière prédéfinie par l'utilisateur appelé.

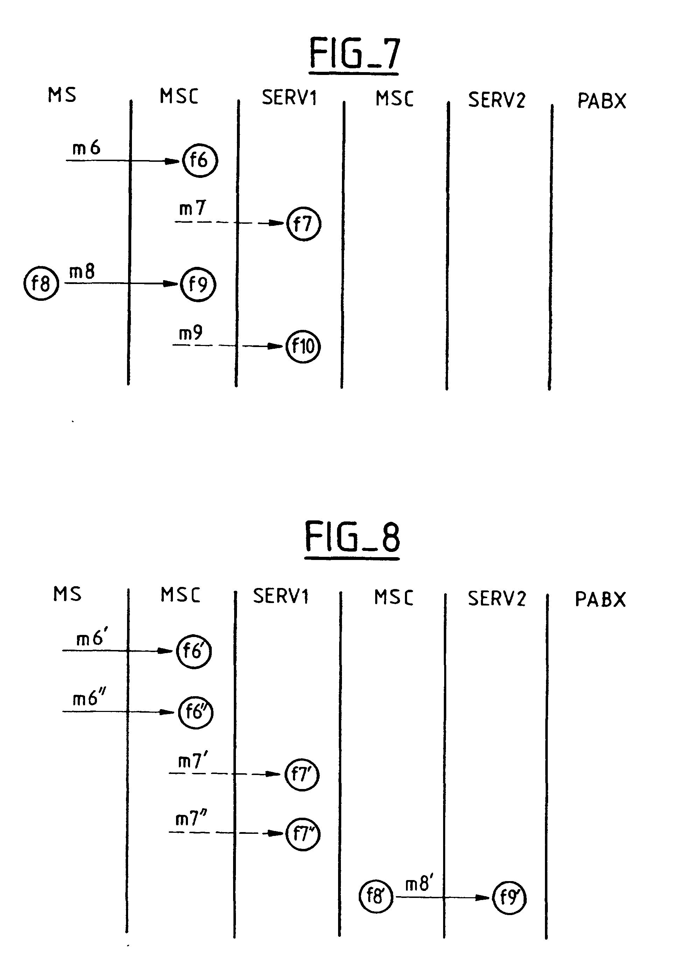

Les différentes fonctions des premier et deuxième équipements serveurs 11 et 12, dans le traitement desdits appels entrants et/ou sortants, sont maintenant illustrées au moyen d'exemples, en référence aux figures 2 à 8.

Dans l'exemple illustré sur la figure 2, un utilisateur du système de télécommunication privé 1 compose sur son terminal mobile 6 un numéro privé constitué soit par un numéro abrégé, pour appeler un autre utilisateur de ce système (le cheminement de l'appel étant alors indiqué sur la figure 2 par des flèches repérées A), soit par un préfixe de sortie suivi d'un numéro public pour appeler un utilisateur extérieur à ce système de télécommunication privé, un tel utilisateur extérieur ayant en l'occurrence un terminal 13 raccordé au système public 5 (le cheminement de l'appel étant alors indiqué sur la figure 2 par des flèches repérées A'). On notera que bien que non illustré sur cette figure, l'invention s'applique également au cas où l'utilisateur compose sur son terminal mobile un code d'activation d'un des services offerts par le système privé.

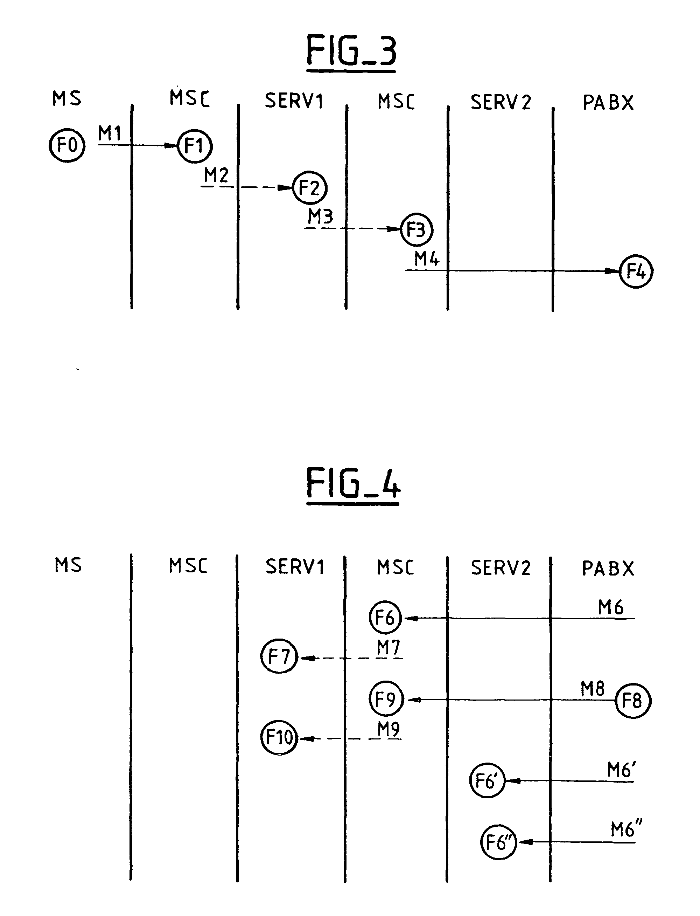

Le traitement d'un tel appel est illustré sur les figures 3 et 4, où les différents messages échangés entre les différentes entités de ce système , pour le traitement de l'appel, sont notés Mi, et où les différentes fonctions réalisées par ces différentes entités, pour le traitement de cet appel, sont notées Fi (où i est un indice représentant l'ordre de succession de ces messages ou fonctions).

Sur les figures 2 et 3 sont par ailleurs notés MS le terminal mobile, et SERV1 et SERV2 respectivement le premier et le deuxième équipement serveur.

Les différentes fonctions et messages mentionnés sur ces figures sont les suivants:
- F0 : l'appel est initié par le terminal mobile MS.
- M1 : message d'établissement d'appel (ou "Call set-up" en anglais), transmis du terminal mobile MS au MSC, et contenant le numéro d'appelant (ici un numéro d'abonné mobile, ou MSISDN) et le numéro d'appelé.
- F1 : le MSC, sur réception du message M1, reconnaît l'appartenance de cet abonné mobile au système de télécommunication privé (une telle information figurant dans l'èntité HLR interrogée, sur la base du numéro d'appelant, par le MSC) et interroge alors le premier équipement serveur SERV1.
- M2 : message adressé par le MSC au premier serveur SERV1, et contenant le numéro d'appelant et le numéro d'appelé.
- F2 : le premier équipement serveur SERV1, sur réception du message M2:
   - détermine, en cas de pluralité de systèmes de télécommunications privés tel que le système 1, l'identité de celui de ces systèmes qui est concerné,
   - vérifie les droits de l'appelant, dans le système concerné, par rapport à un profil d'utilisateur prédéfini,
   - effectue une conversion du numéro d'appelé, de numéro privé en numéro public.
- M3 : message transmis du premier serveur SERV1 au MSC, et contenant le numéro d'appelant, et le numéro d'appelé ainsi converti.
- F3 : sur réception du message M3, le MSC route l'appel vers la bonne destination (cas où l'appelé est un autre utilisateur de ce système: vers le PABX via le deuxième serveur SERV2, cas où l'appelé est un utilisateur extérieur à ce système: vers le réseau public tel que PSTN ou ISDN).
- M4 : message d'alerte correspondant transmis du MSC au PABX.
- F4 : sur réception du message M4, le PABX déclenche la sonnerie du terminal appelé.

Différents cas peuvent se produire:
1-l'utilisateur répond :
   M6 : message de connexion, transmis du PABX au MSC
2-l'utilisateur est en communication:
   M6' : message d'occupation, transmis du PABX au deuxième équipement serveur SERV2,
3- l'utilisateur ne répond pas:
   M6'' : message de non-réponse, transmis du PABX au deuxième équipement serveur SERV2.

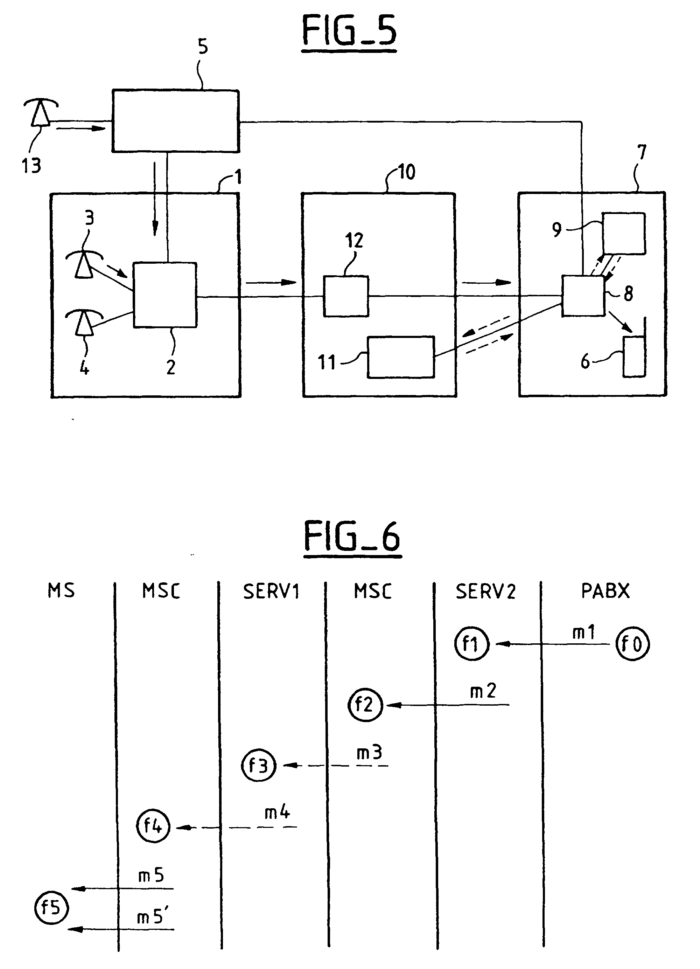

- F6 : sur détection de la réponse de l'utilisateur appelé, le MSC effectue les opérations suivantes:
   - connexion de l'appelant et de l'appelé,
   - démarrage de la taxation.
- M7 : message transmis du MSC au premier équipement serveur SERV1.
- F7 : sur réception du message M7, le premier serveur SERV1 active un compteur pour le comptage des temps de communication de l'utilisateur mobile.
- F8 : un des utilisateurs (par exemple l'utilisateur appelé) met fin à l'appel.
- M8 : message de relâchement de communication transmis du PABX au MSC.
- F9 : Le MSC, sur réception du message M8:
   - stoppe la taxation,
      - libère les ressources allouées à la communication.
- M9 : message transmis du MSC au premier équipement serveur SERV1.
- F10 : Sur réception du message M9, le premier équipement serveur SERV1 stoppe le comptage des temps de communications de l'utilisateur mobile.
- F6' : Sur réception du message M6', le deuxième équipement serveur SERV2 route l'appel vers la boîte vocale de l'appelé. L'appelant peut alors laisser un message dans la boîte vocale de l'appelé.
- F6'' : Sur réception du message M6'', le deuxième équipement serveur SERV2 route l'appel vers un assistant vocal qui donne à l'appelant le choix de joindre l'appelé sur son terminal mobile, ou de laisser un message dans sa boîte vocale.
   - si l'appelant choisit de joindre l'appelé sur son terminal mobile, le deuxième équipement serveur SERV2 traduit le numéro de l'appelé en numéro public d'abonné mobile et route l'appel vers le MSC. L'appel est alors traité comme un appel d'un terminal fixe vers un terminal mobile, qui sera décrit ultérieurement en relation avec les figures 5 à 8.
   - si l'appelant choisit de laisser un message, le deuxième équipement serveur SERV2 route l'appel vers la boîte vocale de l'appelé.

Dans le système illustré sur la figure 5, un utilisateur du système public, ou un utilisateur du système privé, compose sur son terminal (13, ou 3 ou 4 suivant le cas) le numéro d'un utilisateur du système privé, ce numéro étant, dans le premier cas un numéro public, et dans le deuxième cas un numéro privé (ou numéro abrégé).

Le traitement de l'appel est illustré sur les figures 5 à 8, où les différents messages échangés entre les différentes entités de ce système , pour le traitement de l'appel, sont également notés mi, et où les différentes fonctions réalisées par ces différentes entités, pour le traitement de cet appel, sont notées fi (où i est un indice représentant l'ordre de succession de ces messages ou fonctions).

Sur les figures 5 à 8 sont également notés MS le terminal mobile, et SERV1 et SERV2 respectivement le premier et le deuxième équipement serveur.

On considère en outre, dans l'exemple illustré, que l'appel est, au travers du service de numéro unique déjà mentionné, renvoyé du terminal fixe sur le terminal mobile de l'appelé.

Les différentes fonctions et messages sont les suivants:
- f0 : le PABX initie l'appel.
- m1 : message d'établissement d'appel (ou "call set-up") transmis du PABX au deuxième équipement serveur SERV2, et contenant le numéro d'appelant et le numéro d'appelé.
- f1 : l'appel reçu par le deuxième équipement serveur SERV2 est routé vers un assistant vocal. On considère ici que l'appelant choisit de joindre l'appelé sur son terminal mobile. Le deuxième équipement serveur SERV2 traduit alors le numéro d'appelé en numéro public d'abonné mobile.
- m2 : message d'établissement d'appel transmis du deuxième équipement serveur SERV2 au MSC, et contenant le numéro d'appelant et le numéro d'appelé.
- f2 : Le MSC, sur réception du message M2, interroge le premier équipement serveur SERV1.
- m3 : message transmis du MSC au premier équipement serveur, et contenant les numéros d'appelant et d'appelé.
- f3 : Le premier équipement serveur, sur réception du message m3, vérifie les droits de l'utilisateur mobile appelé.
- m4 : message transmis du premier équipement serveur SERV1 au MSC.
- f4 : le MSC commande l'appel du terminal mobile MS.
- m5 : message dit de "paging" transmis du MSC au terminal mobile MS.
- f5 : Le terminal mobile de l'utilisateur sonne. Différents cas sont ici possibles:
   - l'utilisateur répond :
      m6 : message de connexion transmis du terminal mobile MS au MSC,
   - l'utilisateur est en communication:
      m6' : message d'occupation transmis du terminal mobile MS au MSC,
   - l'utilisateur ne répond pas:
      m6'' : message de non réponse transmis du terminal mobile MS au MSC.
- f6 : le MSC établit l'appel et démarre la taxation à la réception du message de connexion.
- m7 : message transmis du MSC au premier équipement serveur SERV1.
- f7 : sur réception du message m7, le premier équipement serveur SERV1 active un moyen de comptage des temps de communication de l'utilisateur mobile.
- f8 : un des utilisateurs (par exemple l'utilisateur du terminal mobile MS) met fin à l'appel.
- m8 : message de relâchement d'appel transmis du terminal mobile MS au MSC.
- f9 : le MSC, sur réception du message m8:
   - stoppe la taxation,
      - libère les ressources allouées pour la communication.
- m9 : message transmis du MSC au premier équipement serveur SERV1.
- f10 : le premier équipement serveur SERV1, sur réception du message m9, stoppe le moyen de comptage des temps de communications mobiles.
- f6' : le MSC reçoit le message d'occupation et, comme l'appel est toujours supervisé par le deuxième équipement serveur SERV2, envoie un message d'occupation (m8') à ce deuxième équipement serveur qui route alors l'appel vers la boîte vocale de l'appelé.
- f6'' : le MSC reçoit le message de non réponse et envoie un message de non réponse (m8') au deuxième équipement serveur SERV2 qui route alors l'appel vers la boîte vocale de l'appelé.
- m7' et m7'' : messages transmis du MSC vers le premier équipement serveur SERV1.
- f8' : L'appel est routé vers le deuxième équipement serveur SERV2.
- m8' : message d'occupation ou de non réponse transmis du MSC au deuxième équipement serveur SERV2.
- f9' : Le deuxième équipement serveur route l'appel vers la boîte vocale de l'appelé, sur réception du message m8'.

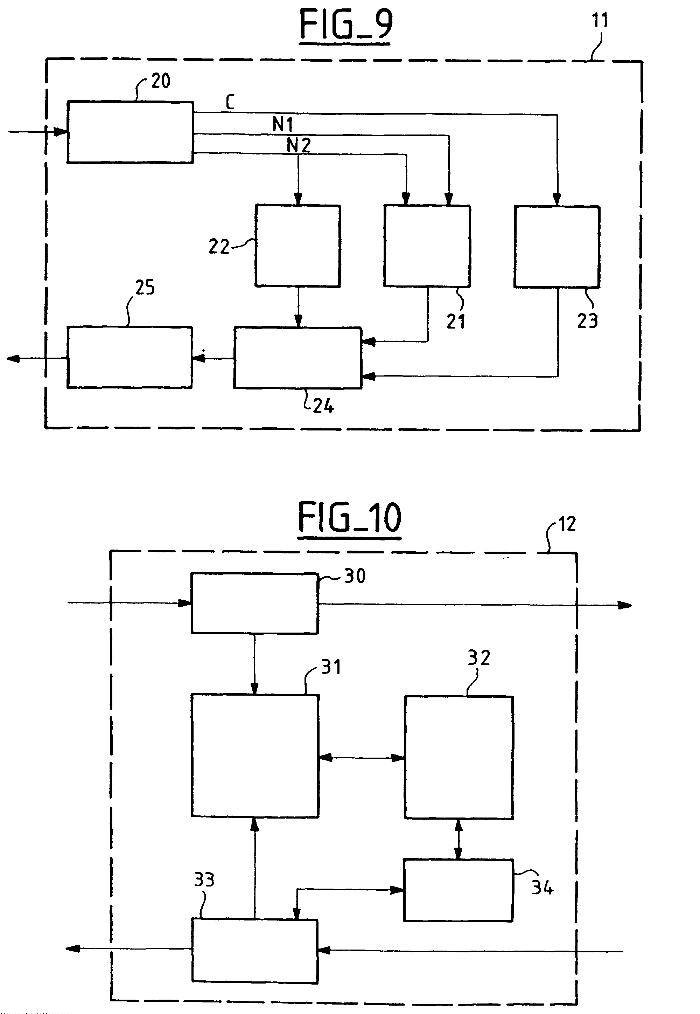

Les figures 9 et 10 sont des schémas destinés à illustrer le type de moyens à prévoir respectivement dans le premier et le deuxième équipement serveur, pour la réalisation des fonctions précitées.

Comme illustré sur la figure 9, le premier équipement serveur 11 comporte des moyens 20 pour recevoir des messages transmis par le MSC et pouvant contenir notamment un numéro d'appelant (noté N1) et un numéro d'appelé (noté N2), ou une commande d'activation ou de désactivation de moyens de comptage de durée de communications mobiles, et pour appliquer le numéro N1 et le numéro N2 à des moyens 21 de stockage de premières données de service dites aussi de profil d'utilisateur mobile, le numéro N2 à des moyens 22 de conversion de numéro privé en numéro public, ou la commande C à des moyens 23 de comptage de durée de communications mobiles.

Lesdites données de profil d'utilisateur mobile comportent notamment des données relatives à d'éventuelles restrictions d'appels entrants et/ou sortants relatives à ces utilisateurs (que ces restrictions s'appliquent relativement à des utilisateurs du système privé ou du système public) .

Le premier équipement serveur comporte en outre des moyens 24 pour autoriser ou non, en fonction des données fournies par les moyens 21 de stockage de données de profil d'utilisateur mobile, et par les moyens de comptage 23, l'émission, vers le MSC, de messages contenant le numéro d'appelé converti par les moyens 22, une telle émission étant réalisée par des moyens d'émission 25.

A titre d'exemple, la coopération entre lesdits premier et deuxième équipement serveur, pour l'établissement d'appels sortants, est la suivante. La conversion de numéro privé en numéro public, effectuée par les moyens de conversion 22, est obtenue par adjonction, à un numéro privé constitué par un numéro abrégé ou par un code de service, d'un numéro public constitué par un numéro public attribué au deuxième équipement serveur 12, pour émission de l'ensemble ainsi obtenu, par le MSC 8, vers ce deuxième équipement serveur 12. Notamment, dans le cas d'une liaison entre le MSC 8 et le deuxième serveur 12 constituée par une liaison de type RNIS, ledit numéro privé est placé dans un champ appelé sous-adresse, d'une adresse RNIS comportant par ailleurs ce numéro public attribué au deuxième équipement serveur 12.

On comprend qu'il n'est pas possible de donner ici une liste exhaustive de tous les exemples de coopération entre le premier et le deuxième équipement serveur, et que d'autres exemples sont bien entendu possibles.

En outre, dans l'exemple considéré, la conversion de numéro privé en numéro public, effectuée par les moyens 22 pour le cas d'appel sortant vers un utilisateur extérieur au système privé, et utilisant un numéro privé constitué par un numéro public précédé d'un préfixe de sortie, consiste en une suppression dudit préfixe de sortie.

Comme illustré sur la figure 10, le deuxième équipement serveur 12 comporte des moyens 30 pour recevoir des informations transmises par le MSC, pour reconnaître dans ces informations des informations de signalisation constituées par le numéro public attribué à ce deuxième équipement serveur et par un numéro privé accompagnant ce numéro public, ou par des informations de signalisation constituées par un message d'occupation ou de non réponse de l'appelé sur son terminal mobile, et, en fonction de ces informations, pour aiguiller l'appel correspondant, soit vers le PABX, soit vers des moyens 31 de traitement de demande de service (tel que notamment un assistant vocal ou un service de messagerie vocale), ces moyens coopérant avec des moyens 32 de stockage de données dites deuxièmes données de service relatives aux utilisateurs mobiles.

Le deuxième équipement serveur SERV2 comporte également des moyens 33 pour recevoir des informations transmises par le PABX, pour reconnaître dans ces informations , des informations de signalisation indiquant un renvoi d'appel d'un terminal fixe raccordé au PABX, vers un terminal mobile associé à ce terminal fixe, ou vers un assistant vocal, ou vers une boîte vocale, et, en fonction de ces informations, pour aiguiller l'appel correspondant, soit vers le MSC, soit vers lesdits moyens 31 de traitement de demande de services coopérant avec lesdits moyens 32 de stockage de données de service.

Le deuxième équipement serveur 12 comporte également, pour le cas d'appel aiguillé vers un terminal mobile, des moyens 34 pour convertir un numéro privé en numéro public d'abonné mobile, ces moyens 34 coopérant également avec les moyens 32 de stockage de données de service.

On note ainsi que des données de service relatives aux utilisateurs mobiles sont stockées dans le premier et dans le deuxième équipement serveur, et que des données de service communes à ces deux équipements nécessitent ainsi a priori une double opération de saisie, en deux endroits différents.

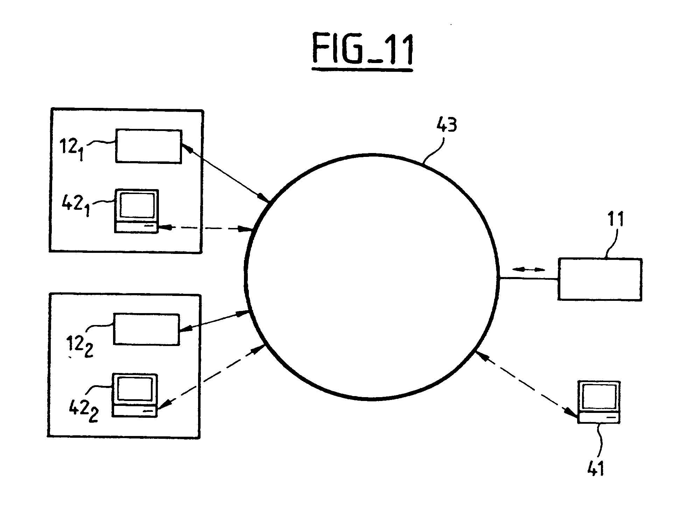

La figure 11 illustre un exemple particulier de coopération entre le premier et le deuxième équipement serveur, pour la gestion desdites données de service, permettant d'éviter une telle double saisie, et donc qui soit plus économique, et en même temps qui évite des incohérences dûes à des erreurs lors d'une telle double saisie.

Suivant la figure 11, les différents équipements (équipements serveurs 11 ou 12 et consoles de gestion associées 41 ou 42) sont reliés en un réseau noté 43. Les données sont entrées dans un seul équipement, en l'occurrence le premier équipement serveur 11 (qui peut être commun à plusieurs systèmes de télécommunications privés tels que le système 1 par exemple, alors qu'un deuxième équipement serveur, tel que 12₁ et 12₂ peut être prévu pour chacun de ces systèmes). Un type d'écran de saisie est proposé par type d'équipement (à savoir premier ou deuxième équipement serveur), et les données ainsi entrées pour le deuxième équipement serveur sont alors transférées à ce deuxième équipement serveur par l'intermédiaire du réseau 43.

Plus généralement, lesdits moyens de coopération entre lesdits premier et deuxième équipement serveur, pour la gestion desdites données de service, comportent un réseau permettant de diffuser des données de service d'un équipement serveur vers au moins un autre équipement serveur.

## Revendications

1. Système (10) pour intégrer des terminaux mobiles (6) à un système de télécommunication privé (1), **caractérisé en ce qu'**il comporte:
- un premier (11) et un deuxième (12) équipement serveur, associés respectivement au système public de télécommunications mobiles (7) auquel accèdent lesdits terminaux mobiles, et au système de télécommunication privé, permettant d'établir des appels entrants ou sortants relatifs à ces terminaux mobiles et selon une numérotation dite numérotation privée propre audit système de télécommunication privé, et contenant des données dites respectivement premières et deuxièmes données de service relatives aux utilisateurs de tels terminaux mobiles,
- des moyens de coopération entre lesdits premier et deuxième équipements serveurs, pour l'établissement desdits appels relatifs auxdits terminaux mobiles et/ou la gestion desdites données de service,
et **en ce que** lesdits moyens de coopération comportent un réseau (43) reliant entre eux lesdits équipements serveurs et permettant de diffuser des données de service d'un équipement serveur vers au moins un autre équipement serveur.

2. Système selon la revendication 1, **caractérisé en ce que** lesdits moyens de coopération comportent, dans le premier équipement serveur (11), des moyens (22) pour convertir un numéro privé, utilisé pour un appel sortant, en un numéro public utilisable par ledit système de télécommunications mobiles, et permettant de router l'appel vers ledit deuxième équipement serveur (12).

3. Système selon la revendication 2, **caractérisé en ce que** ledit numéro public obtenu après conversion inclut ledit numéro privé dans un champ sous-adresse d'une adresse comportant elle-même un numéro public attribué audit deuxième équipement serveur.

4. Système selon l'une des revendications 1 à 3, **caractérisé en ce que** lesdites premières données de service comportent des données permettant de contrôler les droits des utilisateurs de terminaux mobiles et les temps de communication mobiles de ces utilisateurs.

## Patentansprüche

1. System (10) zum Integrieren von mobilen Endgeräten (6) in ein privates Telekommunikationssystem (1), wobei dieses System im Wesentlichen **dadurch gekennzeichnet ist, dass** es umfasst:
- eine erste (11) und eine zweite (12) Servereinrichtung, die mit dem öffentlichen Mobilkommunikationssystem (7) verbunden sind, auf welches die mobilen Endgeräte zugreifen, sowie mit dem privaten Telekommunikationssystem, wodurch es möglich ist, ankommende Anrufe oder abgehende Anrufe im Zusammenhang mit diesen mobilen Endgeräten aufzubauen, und zwar nach einem als privater Rufnummernplan bezeichneten Rufnummernplan, welcher für das private Telekommunikationssystem spezifisch ist und der so genannte erste bzw. zweite Dienstdaten über die Benutzer solcher mobiler Endgeräte enthält;
- Mittel zur Kooperation zwischen der ersten und der zweiten Servereinrichtung zum Aufbau der Anrufe im Zusammenhang mit den mobilen Endgeräten und/oder der Verwaltung der Dienstdaten;
sowie **dadurch**, dass die Mittel zur Kooperation ein Netzwerk 43) umfassen, welches die Servereinrichtungen untereinander verbindet und gestattet, Dienstdaten von einer Servereinrichtung zu mindestens einer anderen Servereinrichtung zu senden.

2. System nach Anspruch 1, **dadurch gekennzeichnet, dass** die Mittel zur Kooperation in der ersten Servereinrichtung (11) Mittel (22) zum Umwandeln einer für einen abgehenden Anruf verwendeten privaten Nummer in eine öffentliche Nummer umfassen, die von dem mobilen Telekommunikationssystem genutzt werden kann und die es ermöglicht, den Anruf zu der zweiten Servereinrichtung (12) zu leiten.

3. System nach Anspruch 2, **dadurch gekennzeichnet, dass** die nach der Umwandlung erhaltene öffentliche Nummer die private Nummer in einem als Unteradresse bezeichneten Feld einer Adresse enthält, welche selbst eine dieser zweiten Servereinrichtung zugewiesene öffentliche Nummer umfasst.

4. System nach einem der Ansprüche 1 bis 3, **dadurch gekennzeichnet, dass** die ersten Dienstdaten Daten umfassen, die das Kontrollieren der Benutzerrechte dieser mobilen Endgeräte in Bezug auf ein vordefiniertes Benutzerprofil sowie der mobilen Verbindungszeiten dieser Benutzer ermöglichen.

## Claims

1. System (10) for integrating mobile terminals (6) into a private telecommunication system (1), **characterized in that** it includes:
- first (11) and second (12) servers respectively associated with a public mobile telecommunication system (7) accessed by said mobile terminals and with the private telecommunication system, enabling setting up of incoming or outgoing calls relating to these mobile terminals and in accordance with a private numbering scheme specific to said private telecommunication system and holding respective first and second service data relating to users of such mobile terminals, and
- means for cooperation between said first and second servers for setting up said calls relating to said mobile terminals and/or managing said service data,
and **in that** said cooperation means include a network (43) interconnecting said servers and enabling distribution of service data from one server to at least one other server.

2. System according to claim 1 charaacterized in that said cooperation means include means (22) in said first server (11) for converting a private number used for an outgoing call into a public number usable by said mobile telecommunication system and enabling the call to be routed to said second server (12).

3. System according to claim 2 **characterized in that** said public number obtained after conversion includes said private number in a sub-address field of an address itself including a public number allocated to said second server.

4. System according to any of claims 1 to 3 **characterized in that** said first service data includes data for monitoring the rights of mobile terminal users and the mobile call times of such users.
